# DEMANDE DE BREVET EUROPEEN

(11) **EP 3 031 333 A1**
(43) Date de publication de la demande: **15.06.2016**
(21) Numéro de dépôt: 15198538.9
(22) Date de dépôt: 08.12.2015
(51) Int. Cl.: A23D 7/00, A23D 7/005, A23L 27/10, A23L 13/60

(54) **BLOC ET TRANCHE DE SAUCE POUR LA PREPARATION D'UN HAMBURGER ET PROCEDE DE PREPARATION D'UN HAMBURGER CORRESPONDANT**

(30) Priorité: 10.12.2014 FR 1462184
(71) Demandeur: Soreal-Ilou, 35150 Brie (FR)
(72) Inventeur: GUYOT, Thomas, 35580 Goven (FR); TANGUY, Alain, 35150 Janze (FR); BOCABEILLE, Gilles, 35000 Rennes (FR)
(74) Mandataire: Ermeneux, Bertrand

(57) **Abrégé**

L'invention concerne un bloc de sauce destiné à être tranché.
Selon l'invention, un tel bloc de sauce comprend 4 à 7% en masse de gélatine, 0,2 à 0,8% en masse de carraghénanes de type iota et/ou kappa et 20 à 40% en masse de matière grasse solide à 20°C.

## Description

### 1. Domaine de l'invention

Le domaine de l'invention est celui de l'agroalimentaire.

Plus précisément, l'invention concerne un bloc de sauce destiné à être tranché, une tranche de sauce obtenue à partir de ce bloc et un procédé de préparation d'un hamburger correspondant.

L'invention trouve notamment une application dans la préparation des hamburgers. Elle s'applique également à la préparation des plats de viande ou de poisson en sauce.

### 2. Etat de la technigue

Un ingrédient essentiel pour donner sa saveur à un hamburger est la couche de sauce qui recouvre le steak de viande ou de poisson du hamburger. Cette couche de sauce est déposée sur le steak cuit lors du montage du hamburger, et on y ajoute éventuellement des condiments, tels que des rondelles de cornichon par exemple.

Dans les chaines de restauration rapide, certaines sauces utilisées pour la préparation d'un hamburger sont conditionnées dans un flacon souple, communément appelé "squeezer", que l'on presse pour faire sortir la sauce. On utilise également des pistolets à sauce pour garnir un hamburger de sauce.

On constate cependant que l'opération qui consiste à appliquer la sauce sur le steak augmente sensiblement le temps de montage d'un hamburger.

Par ailleurs, il est difficile pour un employé d'une chaine de restauration rapide de doser précisément la quantité de sauce et de répartir la sauce uniformément sur le steak à l'aide d'un flacon souple, sans perdre de temps.

En outre, le pressage répété du flacon souple peut entraîner à terme l'apparition d'une tendinite de la main.

### 3. Objectifs de l'invention

L'invention a donc notamment pour objectif de pallier les inconvénients de l'état de la technique cités ci-dessus.

Plus précisément l'invention a pour objectif de fournir une sauce sous forme solide ou semi-solide à température ambiante, qui puisse être aisément découpée en tranches.

Un objectif de l'invention est également de fournir une tranche de sauce qui fonde au contact d'un steak qui vient d'être cuit.

Un autre objectif de l'invention est de fournir une sauce qui soit simple à mettre en oeuvre.

L'invention a également pour objectif de proposer une sauce qui soit d'un coût de revient réduit.

Encore un objectif de l'invention est de fournir une sauce qui soit acceptable pour le consommateur.

### 4. Exposé de l'invention

La demanderesse a constaté de manière surprenante et inattendue, en recherchant une sauce permettant d'atteindre ces objectifs, qu'en associant de la gélatine, des carraghénanes et des graisses semi-solides dans des proportions spécifiques et inédites, il était possible d'obtenir un bloc de sauce facilement tranchable, fournissant des tranches de sauce qui fondent au moins partiellement en quelques dizaines de secondes, en les posant sur un steak de viande, de poisson ou un steak végétarien venant d'être cuit, sans qu'aucune opération de cuisson supplémentaire ne soit nécessaire.

A cet effet, l'invention a pour objet un bloc de sauce destiné à être tranché comprenant 4 à 7% en masse de gélatine, 0,2 à 0,8% en masse de carraghénanes de type iota et/ou kappa et 20 à 40% en masse de matière grasse solide à 20°C.

Ainsi, de façon inédite, l'invention propose une sauce permettant de simplifier le montage d'un hamburger.

Dans le cadre de l'invention, on entend par le terme "sauce" une préparation culinaire destinée à accompagner ou accommoder un met, dans la composition de laquelle entre de la matière grasse.

De préférence, le rapport massique entre ladite gélatine et lesdits carraghénanes est compris entre 7 et 15.

De façon avantageuse, ladite matière grasse appartient au groupe comprenant au moins :
- beurre de cacao ;
- huile de palme ;
- huile de coco.

Dans une variante, le bloc de sauce comprend 4 à 7% en masse de gélatine, 0,2 à 0,8% en masse de carraghénanes de type iota et/ou kappa et 20 à 40% en masse d'l'huile de colza texturée, afin de réaliser une sauce fromagère ou une tranche de fromage fondant.

Dans un mode de réalisation particulier de l'invention, un bloc de sauce tel que décrit ci-dessus comprend 0,05 à 7 % en masse d'amidon modifié.

On limite ainsi les coulées de sauce lorsque celle-ci fond.

Dans un mode de réalisation particulier de l'invention, un bloc de sauce tel que décrit ci-dessus comprend des marquants, tels que des morceaux d'un condiment et/ou d'un légume.

Selon un aspect particulier de l'invention, un bloc de sauce tel que décrit ci-dessus comprend 0,05 à 3 % en masse d'un émulsifiant, tel que du jaune d'oeuf, de la lécithine, de la caséine ou un mono- ou di-glycéride d'acide gras, par exemple.

L'invention concerne également une tranche de sauce obtenue par tranchage d'un bloc de sauce tel que décrit ci-dessus.

Avantageusement, une telle tranche de sauce présente une épaisseur comprise entre 1 et 8 millimètres, de préférence entre 3 et 8 millimètres.

L'invention concerne encore un procédé de préparation d'un hamburger particulièrement simple à mettre en oeuvre.

Selon l'invention, un tel procédé comprend les étapes suivantes :
- obtention d'un bloc de sauce comprenant 4 à 7% en masse de gélatine, 0,2 à 0,8% en masse de carraghénanes de type iota et/ou kappa et 20 à 40% en masse de matière grasse solide à 20°C ;
- tranchage dudit bloc de sauce de sorte à obtenir une tranche de sauce ;
- cuisson d'un steak de viande hachée, d'un steak de poisson ou d'un steak végétarien ;
- montage dudit hamburger comprenant une étape de dépose de ladite tranche de sauce sur ledit steak cuit, de sorte que ladite tranche de sauce fonde au moins partiellement sur ledit steak.

Il convient de noter qu'avantageusement la tranche de sauce fond au contact du steak en moins d'une minute, et typiquement en 20 à 30 secondes, selon l'épaisseur et la composition de la tranche.

Selon un aspect préférentiel de l'invention, ledit steak est porté à une température comprise entre 69 et 80°C lors de ladite étape de cuisson.

### 5. Description détaillée de l'invention

D'autres caractéristiques et avantages de l'invention apparaitront plus clairement à la lecture de la description suivante d'un mode de réalisation de l'invention, donné à titre de simple exemple illustratif et non limitatif.

On donne ci-après les ingrédients entrant dans la composition d'un kilogramme d'un exemple de bloc de sauce selon l'invention :
- 70g de gélatine ;
- 3g d'un mélange de carraghénanes iota et kappa (Matgel MI 6, commercialisé par la société AGI) ;
- 300g de beurre de cacao ;
- 20g de jaune d'oeuf en poudre ;
- 40g d'amidon modifié ;
- 136,9g d'eau ;
- 70g de concentré de tomate ;
- 20g de moutarde ;
- 50g de vinaigre ;
- 3g d'acide citrique ;
- 15g de sel ;
- 100g de sucre cristallisé ;
- 2 g de sorbate de potassium ;
- 0,1g d'arome ;
- 170g de rondelles de cornichon aigre-doux.

Afin de préparer un bloc de sauce à partir de ces ingrédients, on mélange dans une première étape l'ensemble des ingrédients précités, à l'exception des rondelles de cornichon, pendant 20 minutes dans un mélangeur-chauffeur à pâles et à couteau, jusqu'à porter la température du mélange à 90°C.

On incorpore dans une deuxième étape les rondelles de cornichon au mélange, et on les disperse doucement dans le mélange jusqu'à ce qu'elles soient réparties uniformément dans le mélange.

Dans une troisième étape on verse le mélange obtenu dans un moule tubulaire.

Après refroidissement du mélange, on obtient un bloc de sauce gélifiée, de forme sensiblement cylindrique.

On tranche ensuite ce bloc de sauce solidifiée dans un tranchoir afin d'obtenir des tranches de sauce d'épaisseur environ égale à 4 millimètres.

Il convient de noter que la composition du bloc de sauce le rend ferme et peu élastique, ce qui permet d'obtenir des tranches régulières et d'épaisseur convenable, et que les rondelles de cornichons ne se détachent pas des tranches pendant ou après l'opération de tranchage. D'autre part, dans ce mode de réalisation particulier de l'invention, la composition de la tranche de sauce gélifiée a été adaptée de sorte qu'elle puisse fonde lorsqu'elle est portée au dessus de 38°C.

Ces tranches peuvent être alors utilisées directement dans la préparation d'un hamburger.

Lors du montage du hamburger, on empile successivement sur un pain, encore appelé «bun», de la garniture (une feuille de salade et une tranche de tomate), une tranche de fromage et un steak de viande hachée cuite portée à une température de 72°C, selon un ordre connu en soi. Pour finaliser le hamburger, on dépose la tranche de sauce préalablement obtenue sur le steak et on recouvre la tranche de sauce d'un deuxième pain.

30 secondes environ après avoir finalisé le montage du hamburger, le hamburger, dont la sauce a fondu et s'est répartie uniformément sur le steak, peut être consommé.

## Revendications

1. Bloc de sauce destiné à être tranché, **caractérisé en ce qu'**il comprend 4 à 7% en masse de gélatine, 0,2 à 0,8% en masse de carraghénanes de type iota et/ou kappa et 20 à 40% en masse de matière grasse solide à 20°C.

2. Bloc de sauce selon la revendication 1, **caractérisé en ce que** le rapport massique entre ladite gélatine et lesdits carraghénanes est compris entre 7 et 15.

3. Bloc de sauce selon l'une quelconque des revendications 1 et 2, **caractérisé en ce que** ladite matière grasse appartient au groupe comprenant au moins :
- beurre de cacao ;
- huile de palme ;
- huile de coco.

4. Bloc de sauce selon l'une quelconque des revendications 1 à 3, **caractérisé en ce qu'**il comprend 0,05 à 7 % en masse d'amidon modifié.

5. Bloc de sauce selon l'une quelconque des revendications 1 à 4, **caractérisé en ce qu'**il comprend des marquants, tels que des morceaux d'un condiment et/ou d'un légume.

6. Bloc de sauce selon l'une quelconque des revendications 1 à 5, **caractérisé en ce qu'**il comprend 0,05 à 3 % en masse d'un émulsifiant, tel que du jaune d'oeuf, de la lécithine, de la caséine ou un mono- ou di-glycéride d'acide gras.

7. Tranche de sauce obtenue par tranchage d'un bloc de sauce selon la revendication 1.

8. Tranche de sauce selon la revendication 7, **caractérisée en ce qu'**elle présente une épaisseur comprise entre 1 et 8 millimètres, de préférence entre 3 et 8 millimètres.

9. Procédé de préparation d'un hamburger, **caractérisé en ce qu'**il comprend les étapes suivantes :
- obtention d'un bloc de sauce comprenant 4 à 7% en masse de gélatine, 0,2 à 0,8% en masse de carraghénanes de type iota et/ou kappa et 20 à 40% en masse de matière grasse solide à 20°C ;
- tranchage dudit bloc de sauce de sorte à obtenir une tranche de sauce ;
- cuisson d'un steak de viande hachée, d'un steak de poisson ou d'un steak végétarien ;
- montage dudit hamburger comprenant une étape de dépose de ladite tranche de sauce sur ledit steak cuit, de sorte que ladite tranche de sauce fonde au moins partiellement sur ledit steak.

10. Procédé de préparation d'un hamburger selon la revendication 9, **caractérisé en ce que** ledit steak est porté à une température comprise entre 69 et 80°C lors de ladite étape de cuisson.
